# EUROPÄISCHE PATENTANMELDUNG

(11) **EP 1 282 151 A2**
(43) Veröffentlichungstag der Anmeldung: **05.02.2003**
(21) Anmeldenummer: 02102081.3
(22) Anmeldetag: 31.07.2002
(51) Int. Cl.: H01J 61/02, F21V 14/04, F21S 8/12

(54) **Entladungslampe und Scheinwerfer für ein Kraftfahrzeug**

(30) Priorität: 02.08.2001 DE 10137837
(71) Anmelder: Philips Corporate Intellectual Property GmbH, 20099 Hamburg (DE); Koninklijke Philips Electronics N.V., 5621 BA Eindhoven (NL)
(72) Erfinder: Tiesler-Wittig, Helmut,c/o Philips Corp.Intel.Prop, 52088, Aachen (DE)
(74) Vertreter: Volmer, Georg, Dipl.-Ing.

(57) **Zusammenfassung**

Eine Entladungslampe (10) und ein Scheinwerfer (40) für ein Kraftfahrzeug werden vorgestellt. Um zwischen verschiedenen Lichtverteilungen umschalten zu können, ist ein Bewegungsglied vorgesehen, das zwischen mindestens zwei Stellungen bewegbar ist. Es weist mindestens ein optisch wirksames Element, bevorzugt eine Linse (30), auf, das ein gegenüber dem tatsächlichen Ort der Gasentladung (17) verschobenes Bild hiervon erzeugt. Durch eine Bewegung des Bewegungsgliedes zwischen den beiden Stellungen wird bei dem Scheinwerfer (40) eine Umschaltung zwischen zwei verschiedenen Lichtverteilungen ermöglicht, wobei sich jeweils für einen Bereich des Reflektors (42) durch die Umschaltung die Gasentladung (17) zu verschieben scheint, so dass sich verschiedene Lichtverteilungen ergeben. Bevorzugt handelt es sich bei dem Bewegungsglied um den Außenkolben (20) der Entladungslampe (10), an dem zwei Linsen (30) angeordnet sind, und der um die optische Achse drehbar ist.

## Beschreibung

Die Erfindung betrifft eine Entladungslampe und einen Scheinwerfer für ein Kraftfahrzeug.

Neben den schon seit längerer Zeit im Automobilbereich eingesetzten Glühlampen werden in wachsendem Maße auch Entladungslampen für die Kfz-Beleuchtung eingesetzt. Bei bekannten Entladungslampen wird in einem abgeschlossenen Entladungsgefäß zwischen zwei Elektroden eine Gasentladung erzeugt, die sehr intensives Licht aussendet.

Eine Entladungslampe weist üblicherweise einen Sockel, einen Brenner mit einem Entladungsgefäß und einen Außenkolben auf. Der Sockel dient zur Halterung des Brenners und zur Positionierung sowie elektrischen Kontaktierung der Lampe in einem Scheinwerfer. In dem Entladungsgefäß findet die eigentliche Lichterzeugung statt. Um das Entladungsgefäß herum ist üblicherweise ein Außenkolben aus Glas angeordnet. Dieser dient zum Ausfiltern von UV-Strahlung aus dem ausgesandten Licht.

Ein Kfz-Scheinwerfer weist einen Reflektor und eine durch eine Öffnung in das Innere des Reflektors hineinragende Lampe auf. Die Lampe wird mit ihrem Sockel in einer Halterung des Reflektors genau positioniert, so dass das Entladungsgefäß an einem genau bekannten Ort angeordnet ist. Durch das ausgesandte Licht wird die Reflektoroberfläche beleuchtet. Je nach Form der Reflektoroberfläche wird so ein Scheinwerferlichtbündel gebildet, das nach vorne abgestrahlt wird. Für solche Scheinwerferlichtbündel existieren - je nach zu erfüllendem Beleuchtungszweck - verschiedene Spezifikationen. So muss ein Abblendlicht beispielsweise eine asymmetrische Lichtverteilung mit einer im Wesentlichen horizontalen scharf begrenzten Hell/Dunkel-Grenze aufweisen, damit der entgegenkommende Verkehr nicht geblendet wird. In einem Fernlichtbündel hingegen soll die maximale Lichtintensität auf der optischen Achse konzentriert sein, während die übrige Lichtverteilung in etwa symmetrisch sein kann und keine Hell/Dunkel-Grenze aufweist.

Während die Entladungslampe gegenüber herkömmlichen Halogen-Lampen eine Anzahl von Vorteilen aufweist, ist es im Gegensatz zu beispielsweise bekannten "H4"-Lampen bei einer Entladungslampe erheblich schwieriger, durch eine Lampe bzw. durch einen Scheinwerfer mit einer Lampe zwei Beleuchtungsfunktionen gleichzeitig erfüllen zu können.

So wird in der DE-A-4435507 ein Scheinwerfer beschrieben mit einem Reflektor und einer Lichtquelle, die in einem Lampenträger angeordnet ist, der relativ zum Reflektor durch ein Stellelement um eine horizontale Achse zwischen einer Stellung für Abblendlicht und einer Stellung für Fernlicht schwenkbar ist. Zusätzlich sind bewegliche Abschatter gezeigt, die sich beim Verschwenken von der Abblend- in die Fernlichtstellung so bewegen, dass in der Fernlichtstellung auch ein unterer Bereich des Reflektors, der in der Abblendlichtstellung abgeschattet ist, beleuchtet wird.

In der DE-A-19825375 ist ein auf- und abblendbarer Scheinwerfer mit Gasentladungslampe für Kraftfahrzeuge beschrieben. Die Gasentladungslampe ist in einer festen Stellung im Reflektorgehäuse des Reflektors eingebaut. Ein Polarisationsfilter, der als Stellglied gesteuert durchsichtig und undurchsichtig gemacht werden kann, ist im Reflektorgehäuse so angeordnet, dass zwischen Abblend- und Fernlichtfunktion umgeschaltet werden kann.

In der EP-A-0324652 ist ein Automobilscheinwerfer mit einem parabolischen Reflektor und einer Gasentladungslampe beschrieben. Die Gasentladungslampe ist im "Brennpunkt" des Reflektors angeordnet. Um zwischen Abblend- und Fernlicht umzuschalten, wird durch Erzeugung eines elektrischen oder magnetischen Feldes der Lichtbogen der Lampe so abgelenkt, dass in Zusammenwirkung mit dem Reflektor in einer ersten Position des Lichtbogens ein Fernlichtbündel und in einer anderen Position ein Abblendlichtbündel erzeugt wird.

In der GB-A-2216332 ist ein Scheinwerfer für ein Automobil beschrieben, bei dem eine Gasentladungslampe innerhalb eines Reflektors angeordnet ist. Die Gasentladungslampe erzeugt ein sehr konzentriertes Licht an ihrer Kathode. Durch Wechsel der Polarität wird der Ort der Lichterzeugung zwischen den im Abstand voneinander angeordneten Elektroden umgeschaltet, so dass durch unterschiedliche Reflexion am Reflektor ein Abblendoder ein Fernlichtbündel erzeugt wird.

In der Praxis weisen bisherige Lösungen einige Nachteile auf. Bei mechanischer Bewegung des Brenners ist es extrem aufwendig, die notwendige exakte Positionierung innerhalb des Reflektors zu erzielen. Auch die anderen Lösungen haben sich als aufwendig und nicht in allen Fällen zufriedenstellend erwiesen.

Demgegenüber ist es Aufgabe der Erfindung, eine Lampe sowie einen Scheinwerfer für ein Kraftfahrzeug anzugeben, bei dem in einfacher Weise eine Umschaltung zwischen zwei Beleuchtungsfunktionen erfolgt, wobei trotzdem eine exakte Positionierung des Entladungsgefäßes erhalten bleibt.

Diese Aufgabe wird gelöst durch eine Entladungslampe nach Anspruch 1 und einen Scheinwerfer nach Anspruch 6. Abhängige Ansprüche beziehen sich auf vorteilhafte Ausführungsformen der Erfindung.

Erfindungsgemäß ist an der Lampe ein Bewegungsglied vorgesehen, das mindestens ein optisch wirksames Element aufweist. Das Bewegungsglied ist an der Lampe beweglich angebracht, so dass es gegenüber dem Entladungsgefäß mindestens zwei verschiedene Stellungen einnehmen kann.

Das Bewegungsglied weist mindestens ein optisch wirksames Element auf. Hierfür kommen bevorzugt Linsen, aber beispielsweise auch Prismen oder Spiegel, insbesondere Hohlspiegel, in Frage. Das optisch wirksame Element erzeugt ein Bild der Gasentladung im Entladungsgefäß, das gegenüber dem tatsächlichen Ort der Gasentladung verschoben ist. Dies hat zur Folge, dass bei Betrachtung der Gasentladung von einem Ort optisch hinter dem optisch wirksamen Element die Gasentladung verschoben zu sein scheint.

Das Bewegungsglied ist hierbei zwischen mindestens zwei Stellungen bewegbar, so dass gezielt gesteuert werden kann, ob aus einer bestimmten Richtung das Entladungsgefäß mit der dann stattfindenden Entladung direkt oder das durch das optisch wirksame Element verschobene Bild davon sichtbar ist.

Ein erfindungsgemäßer Scheinwerfer weist einen Reflektor und eine Lampe mit einem Bewegungsglied auf. Ein bestimmter Bereich des Reflektors wird - je nach Stellung des Bewegungsgliedes - entweder direkt durch die Gasentladung beleuchtet oder nach Durchgang durch das optisch wirksame Element, also durch das von dem Element erzeugte, verschobene Bild der Entladung. Für diesen Bereich des Reflektors erscheint - je nach Stellung des Bewegungsgliedes - das Entladungsgefäß entweder an seiner tatsächlichen Stelle oder an einer hierzu verschobenen Position.

Mit der erfindungsgemäßen Lampe und dem erfindungsgemäßen Scheinwerfer ist eine Bewegung des eigentlich lichterzeugenden Elements, nämlich des Entladungsgefäßes, nicht nötig. Das Entladungsgefäß und der gesamte Brenner können vielmehr ortsfest verbleiben, was insbesondere im Hinblick auf die feste Halterung, genaue Positionierung und dem elektrischen Anschluss vorteilhaft ist. Das Bewegungsglied kann direkt an der Lampe, beispielsweise am Sockel angeordnet sein. Es ist aber auch möglich, das Bewegungsglied separat im Reflektor vorzusehen.

Durch die Erfindung wird der Effekt erzielt, dass mindestens für bestimmte Reflektorbereiche das lichterzeugende Entladungsgefäß je nach Stellung des Bewegungsgliedes scheinbar zwischen zwei Positionen verschoben wird. Wie aus dem genannten Stand der Technik und auch von herkömmlichen "H4"-Lampen bekannt, können durch "Verschiebung" des lichterzeugenden Elements mit einem Reflektor zwei Beleuchtungsfunktionen realisiert werden. Dem Fachmann ist hierbei im Detail bekannt, wie sich eine Verschiebung der Lichtquelle auf das von einem Reflektor ausgesandte Lichtbündel auswirkt. Dieser Effekt wird beispielsweise mit Zweifaden-Glühlampen ausgenutzt (z. B. "H4"), wo mit einem Reflektor und zwei in nur geringem Abstand angeordneten Wendeln zwei verschiedene Lichtbündel erzeugt und so zwei Beleuchtungsfünktionen erfüllt werden. Bei einem Parabol-Reflektor beispielsweise bewirkt eine geringfügige Verschiebung aus dem Brennpunkt nach vorne und oben eine Verteilung, die statt des parallelen Lichtbündels eine nach unten verschobene Abblendlichtverteilung erzeugt. In Verbindung mit eigens entworfenen "Freiflächen", auch als "complex shape" bezeichneten Reflektorflächen deren Form für den jeweiligen Anwendungszweck numerisch ermittelt wird, lassen sich durch die "Verschiebung" der Lichtquelle zwei unterschiedliche Lichtbündel erzeugen, deren Anforderungen jeweils vorher festgelegt und beim Entwurf der Flächen berücksichtigt werden.

Gemäß einer Weiterbildung der Erfindung wird vorgeschlagen, dass das Bewegungsglied eine Hülle aus einem transparenten Material ist, die das Entladungsgefäß umgibt. In einer besonders vorteilhaften Gestaltung handelt es sich um den Außenkolben der Entladungslampe. Dieser Außenkolben, der bisher vor allem als UV-Filter diente, ist in herkömmlichen Anwendungen fest mit dem Entladungsgefäß verbunden, üblicherweise angeschmolzen. Dies ist jedoch nicht notwendig. Daher kann der Außenkolben als Bewegungsglied verwendet werden.

Der Außenkolben ist üblicherweise längs zur optischen Achse angeordnet. Als Bewegungsglied kann er axial verschoben werden. Bevorzugt wird jedoch, das Bewegungsglied drehbeweglich, insbesondere um die optische Achse herum drehbar angeordnet. So ist eine gute Lagerung und exakte Positionierung einfach erreichbar. Der Antrieb kann auf verschiedene Weise realisiert sein. Möglich ist der Einsatz von mechanischen Stellgetrieben ebenso wie direkter Antrieb durch einen Elektromotor. Denkbar sind auch Piezo-Aktuatoren oder die Verwendung von Elektromagneten.

In einer vorteilhaften Ausgestaltung ist am Außenkolben das optisch wirksame Element angebracht. Bevorzugt handelt es sich um zwei optische Elemente, die an gegenüberliegenden Seiten des Außenkolbens aufgebracht sind und in einer Ebene senkrecht zur optischen Achse, in der die Lichtquelle liegt, je in einem Winkelbereich von 25 bis 120 °, bevorzugt etwa 60 bis 90° wirksam sind.

Als optisch wirksame Elemente werden Linsen bevorzugt, die so geformt sind, dass sie die Gasentladung bei Betrachtung durch die Linse verschoben, bevorzugt in Richtung der optischen Achse verschoben erscheinen lassen. Entsprechende Linsen können vom Fachmann für den jeweiligen Anwendungsfall leicht entworfen werden.

Nachfolgend wird eine Ausführungsform der Erfindung an Hand von Zeichnungen näher beschrieben. In den Zeichnungen zeigen
- Fig. 1: eine Seitenansicht einer Ausführungsform einer erfindungsgemäßen Lampe mit einem Bewegungsglied in einer ersten Stellung;
- Fig. 1a: eine Seitenansicht der Lampe aus Figur 1 mit dem Bewegungsglied in einer zweiten Stellung;
- Fig. 2: eine Frontansicht der Lampe aus Figur 1;
- Fig. 2a: eine Frontansicht der Lampe aus Figur 1a mit dem Bewegungsglied in der zweiten Stellung;
- Fig. 3: eine Ansicht eines Längsschnittes durch eine Ausführungsform eines erfindungsgemäßen Scheinwerfers;
- Fig. 4: eine perspektivische Ansicht des Scheinwerfers aus Figur 3;
- Fig. 5: ein Diagramm zur Verdeutlichung der Abbildung einer Entladung auf einem Projektionsschirm;

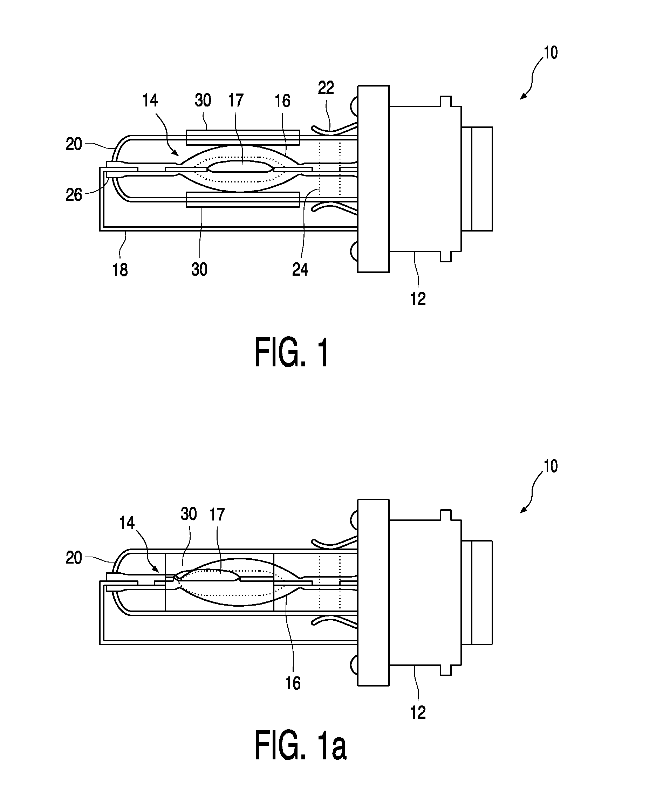

In Figur 1 ist eine Entladungslampe 10 dargestellt. Die Entladungslampe 10 umfasst einen Sockel 12, einen Brenner 14 mit einem Entladungsgefäß 16 und einem Rückführpol 18.

Der Sockel 12 weist elektrische Kontakte auf, die über Durchführung bzw. den Rückführpol 18 mit den Elektroden des Entladungsgefäßes 16 verbunden sind. So kann eine Entladung innerhalb des Entladungsgefäßes 16 erzeugt werden. Derartige Entladungslampen sind dem Fachmann in verschiedenen Variationen bekannt, so dass hier auf den bekannten Aufbau und die Funktionsweise nicht weiter eingegangen werden soll.

Die Entladungslampe 10 weist um den Brenner 14 herum einen Außenkolben 20 auf. Es handelt sich um ein Glasröhrchen mit einem Innendurchmesser, der nur geringfügig größer ist als der Außendurchmesser des Entladungsgefäßes 16. Im vorliegenden Fall weist das im Längsschnitt ovale Entladungsgefäß einen maximalen Außendurchmesser von 6 mm auf. Der Außenkolben 20 weist einen Außendurchmesser von 8,7 mm und eine Wandstärke von ca. 1 mm auf. Das Glas des Außenkolbens ist in dem Fachmann bekannter Weise dotiert, so dass es eine gute UV-Absorption gewährleistet.

Der Außenkolben 20 ist am Sockel 12 über Laschen 22 gehalten, die an einer Manschette 24 befestigt sind. Der Außenkolben 20 ist gegenüber dem Sockel 12 um eine mit der Längsmittelachse der Lampe 10 zusammenfallende Drehachse drehbar. Hierfür sind die Laschen 22 auf einem innerhalb des Sockels 12 drehbeweglich gelagerten Ring (nicht dargestellt) angebracht. Durch Drehen des Rings dreht sich der Außenkolben 20 um den Brenner 14 herum. An der Spitze 26 des Außenkolbens 20 ist dieser am Glasröhrchen des Brenners 14 ebenfalls drehbar gelagert.

An den Außenwänden des Außenkolbens 20 sind zwei Linsen 30 angeordnet. Im gezeigten Beispiel sind diese Linsen nur symbolisch dargestellt, d. h. in Figur 1 ist ihre optisch wirksame Krümmung nicht gezeichnet. Die Linsen können wie im gezeigten Beispiel auf der Außenwand des Außenkolbens 20 als separate Elemente angeordnet sein oder durch Variation der Wandstärke des Außenkolbens 20 einstückig mit diesem sein.

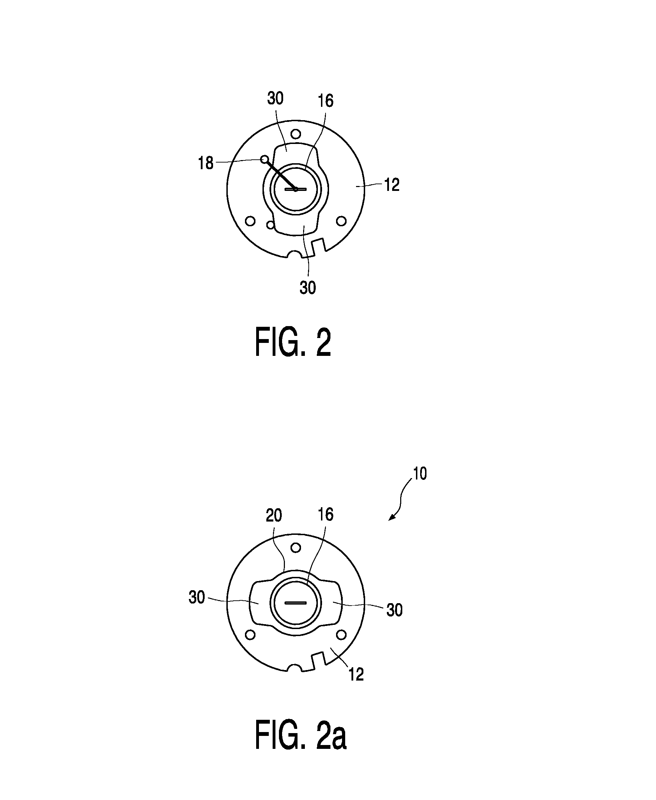

In Figur 2 ist die Lampe aus Figur 1 in einer Frontansicht dargestellt. Zu sehen ist, dass die Linsen 30 ober- und unterhalb des Entladungsgefäßes 16 angeordnet sind, wobei sie jeweils in einer Ebene senkrecht zur optischen Achse bzw. zur Längsmittelachse der Lampe 10 in einem Winkelbereich einer Breite von je ca. 90° ober- und unterhalb des Entladungsgefäßes optisch wirksam sind. Die in Figur 1 und Figur 2 gezeigte Stellung des Außenkolbens 20, bei dem die Linsen 30 ober- und unterhalb des Entladungsgefäßes 16 angeordnet sind, wird im Folgenden als "erste Stellung" bezeichnet.

Dem gegenüber zeigen die Figuren 1a und 2a ebenfalls die Lampe 10 allerdings mit dem Außenkolben 20 in einer zweiten Stellung. Der Außenkolben 20 ist in der zweiten Stellung gegenüber der ersten Stellung um 90° gedreht. Die restliche Lampe mit Sockel 12 und Brenner 14 befindet sich jedoch in derselben Lage wie in Figur 1.

Aus der in den Figuren 1 und 1a gezeigten seitlichen Sicht befindet sich in Figur 1 keine Linse vor dem Entladungsgefäß. In der in Figur 1a dargestellten zweiten Stellung befindet sich aus dieser Sicht aber eine der Linsen 30 nun vor dem Entladungsgefäß 16, so dass die Linse bei Betrachtung der Entladung 17 aus dieser Richtung optisch wirksam ist. Wie in Figur 1a dargestellt wirkt Linse 30 in der Weise, dass die Entladung 17 (die sich tatsächlich weiterhin am, in Figur 1 dargestellten, ursprünglichen Ort befindet) in Richtung der optischen Achse nach vorne sowie nach oben verschoben scheint.

Die zweite Stellung des Außenkolbens 20, bei der die Linsen 30 rechts und links seitlich des Entladungsgefäßes 16 angeordnet sind, ist auch aus Figur 2a ersichtlich. Der Sockel 12 mit den Rastnuten zur exakten Positionierung in einer Halterung befindet sich weiterhin in derselben Position wie in Figur 2. Durch Drehung des drehbaren Rings (nicht dargestellt) innerhalb des Sockels 12 ist der Außenkolben 20 gegenüber Figur 2 um 90° gedreht.

Die Lampe 10 hat so die Linsen 30 als optisch wirksame Elemente, die in der ersten Stellung in zwei jeweils ca. 90° breiten Winkelbereichen ober- und unterhalb der Entladung 17 wirksam sind, so dass aus diesen Richtungen gesehen die Entladung 17 verschoben erscheint. Bei Betrachtung aus den ebenfalls jeweils 90° breiten Bereichen rechts und links seitlich der Entladung 17 sind die Linsen 30 nicht aktiv, so dass die Entladung 17 an ihrem tatsächlichen Ort zu sehen ist. In der zweiten Stellung dreht sich das Bild um 90° , wobei nun in den Bereichen ober- und unterhalb der Entladung 17 diese direkt sichtbar ist, von seitlich betrachtet jedoch nur durch die Linsen 30, so dass sie verschoben erscheint.

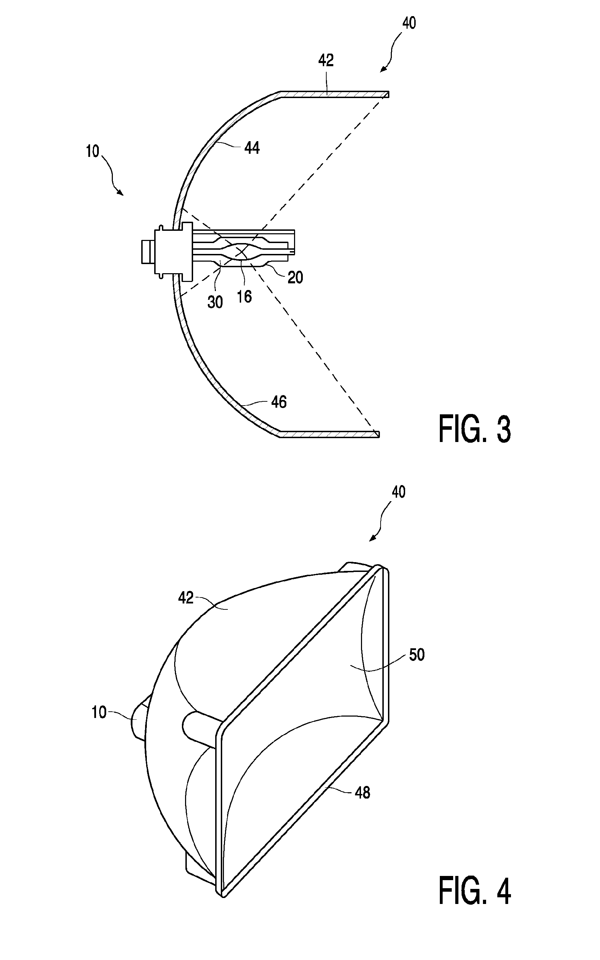

In Figur 3 ist ein Längsschnitt durch eine erste Ausführungsform eines Scheinwerfers 40 dargestellt. Der Scheinwerfer 40 umfasst einen Reflektor 42 sowie die oben dargestellte Lampe 10, die durch eine zentrale Öffnung des Reflektors 42 in das Innere des Reflektorgehäuses hineinragt, so dass das Entladungsgefäß 16 an vorbestimmter Stelle zentral im Inneren des Reflektorgehäuses positioniert ist. Hierfür ist der Sockel 12 in einer nicht näher dargestellten Halterung des Reflektorgehäuses aufgenommen. Von dort ist die Lampe 10 auch elektrisch kontaktiert.

Der drehbare Außenkolben 20 mit den beiden Linsen 30 befindet sich in der ersten Stellung. Ein Reflektorbereich 44 oberhalb und ein Reflektorbereich 46 unterhalb des Entladungsgefäßes 16 werden so nicht direkt von der Entladung beleuchtet, sondern von dem durch die Linsen 30 verschobenen Bild dieser Entladung.

In Figur 4 ist Scheinwerfer 40 noch einmal in einer perspektivischen Darstellung gezeigt. Der Reflektor 42 weist einen rechteckigen Rahmen 48 auf. Die Innenwand 50 des Reflektors ist eine gekrümmte Fläche. Im dargestellten Beispiel handelt es sich hierbei allerdings nicht um eine parabolische Fläche, sondern um eine speziell geformte Freifläche. Dem Fachmann sind derartige Reflektorformen auch unter dem Begriff "complex shape" bekannt. Solche Reflektorformen werden mit dem Fachmann bekannten numerischen Verfahren berechnet. Vorgabe hierbei ist es, Abbildungen der an einem festen Ort positionierten Entladung so zu überlagern und zu projizieren, dass ein Scheinwerferlichtbündel mit einer gewünschten Lichtverteilung entsteht.

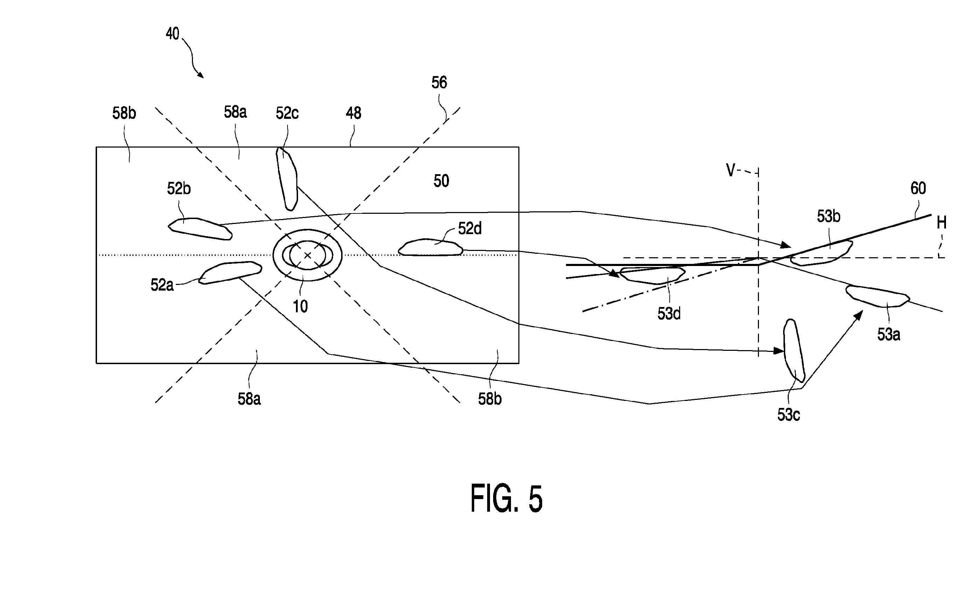

Dies ist in Figur 5 schematisch dargestellt. Auf der linken Seite ist eine Frontansicht des Scheinwerfers 40 mit dem rechteckigen Rahmen 48 gezeigt. Mittig befindet sich die hier nur symbolisch gezeigte Lampe 10. Auf der Reflektorfläche 50 sind eine Anzahl von reflektierten Bildern 52a bis 52d der Entladung gezeigt.

Auf der rechten Seite von Figur 5 ist ein Projektionsschirm abgebildet. Hierbei handelt es sich um einen genormten Messschirm mit den Linien, an Hand derer Normen für Lichtverteilungen festgelegt sind. Der Schirm soll die Verhältnisse bei der Frontbeleuchtung eines Kfz wiedergeben. Die optische Achse verläuft hierbei durch den Schnittpunkt der Linien H und V, wobei die Linie H den Horizont bezeichnet. Damit eine Blendung des Gegenverkehrs ausgeschlossen ist, muss eine Abblendlichtverteilung eine Hell/Dunkel-Grenze einhalten, bei der an festgelegten Punkten unterhalb der Linie 60 eine gewisse Mindestbeleuchtung erreicht wird, oberhalb der Linie 60 jedoch nicht mehr als ein geringer Maximalwert. Diese Hell/Dunkel-Grenze verläuft im Wesentlichen horizontal, wobei, wie aus Figur 5 ersichtlich, bei Rechtsverkehr die Linie 60 in der rechten Hälfte des Schirms 15 ansteigt. Bei Linksverkehr ergibt sich ein an der Linie V gespiegeltes Bild.

Die Bilder 52a bis 52d der Entladung auf der linken Seite von Figur 5 sind mit ihrem jeweiligen Projektionsorten 53a bis 53d auf den Projektionsschirmen durch Pfeile verbunden.

Wie zu erkennen ist, korrespondieren die meridionalen Ebenen der optischen Fläche 50 des Reflektors 42 mit den meridionalen Abbildungen des Bogens in Bündel und damit auf den Messschirm, ebenso die sagitalen Ebenen mit den sagitalen Abbildungen. Zur Realisierung eines Bündels mit einer im Wesentlichen horizontalen Hell/Dunkel-Grenze werden demnach entsprechend ECE R8/R20/R98 die im Wesentlichen horizontalen Bilder 53a, 53b, 53d verwendet. Vertikale Bilder 53c werden lediglich zur Vorfeldbeleuchtung verwendet. Die Hell/Dunkel-Grenze wird durch vorgegebene Maximal-Intensitäten oberhalb (Blendung) und Minimal-Intensitäten unterhalb der Linie vorgegeben.

Die seitlichen Flächen 58b sind gegenüber den oberen bzw. unteren Bereichen 58a erheblich größer. Ihr Einfluss auf die Lichtverteilung ist daher stärker. Bei der dargestellten Rechteckform des Reflektors 42 beträgt die Gesamtfläche der Bereiche 58a nur ca. 1/4 des Reflektors.

In Figur 5 sind gestrichelte Linien 56 dargestellt, die die Bereiche begrenzen, in denen die Linsen 30 wirksam sind (in der in Figur 5 dargestellten zweiten Stellung die Bereiche 58b seitlich der Lampe 10) und die Bereiche, in denen die Linsen 30 in der zweiten Stellung nicht wirksam sind, nämlich Reflektorflächen 58a, ober- und unterhalb der Lampe 10. Wie oben erläutert, sind bei dem betrachteten Reflektor, wie bei vielen heute verwendeten Reflektoren die seitlichen Flächen 58b für die Lichtverteilung erheblich wichtiger als die oberen- bzw. unteren Flächen 58a. Die Form der seitlichen Flächen 58b ist exakt berechnet, so dass bei Anordnung einer Lichtquelle in einem "Brennpunkt" eine zumindest näherungsweise symmetrische Fernlichtverteilung erzeugt wird, während bei Anordnung der Lichtquelle an einem zweiten Punkt, der gegenüber dem "Brennpunkt" nach vorne verschoben ist, die horizontalen Bilder der Entladung entlang der im Wesentlichen horizontal verlaufenden Hell/Dunkel-Grenze der Verteilung auf dem Messschirm projiziert werden. Die Bezeichnung "Brennpunkt" ist hier eigentlich nicht völlig zutreffend, wegen der besseren Anschaulichkeit wird dieser eigentlich nur beim Parabol-Reflektor exakte Begriff aber hier auch für "complex-shape"-Reflektoren verwendet. Bei der Berechnung der Form dieser Flächen wird von einer jeweils exakten Positionierung der Entladung ausgegangen.

In der in Figur 5 dargestellten zweiten Stellung des Außenkolbens, bei dem die Linsen 30 rechts und links seitlich angeordnet sind, erscheint aus Sicht der seitlichen Reflektorbereich 58b die Entladung an verschobener Stelle. Eine Entladung an dieser Stelle wird durch die speziell geformten Freiflächen des Reflektors 42 wie in Figur 5 zur Bildung eines Lichtbündels mit klarer Hell/Dunkel-Grenze reflektiert. Die Bereiche 58a ober- und unterhalb der Lampe werden hingegen durch die Entladung von ihrer tatsächlichen Position aus beleuchtet. Hierbei sind die Flächen so entworfen, dass die vertikalen Bilder der Entladung zur Vorfeldbeleuchtung verwendet werden (Bereich 52c, Projektion 53c). Bei der dargestellten Form des Reflektors ist eine Verschiebung der Lichtquelle für die zur Vorfeldbeleuchtung genutzten vertikalen Projektionen 53c jedoch ohne entscheidenden Einfluss auf die Lichtverteilung.

Wird hingegen der Außenkolben 20 in die erste Stellung gedreht (nicht dargestellt), so werden die seitlichen Bereiche 58b direkt durch die Entladung beleuchtet und nicht mehr nach Durchgang durch die Linsen 30. Hierdurch ändert sich die Lichtverteilung entscheidend. Die nunmehr aus Sicht der Flächen 58b im "Brennpunkt" angeordnete Entladung erzeugt in Zusammenwirken mit den seitlichen Reflektorflächen 58b ein Fernlichtbündel mit symmetrischer Verteilung und ohne die in der zweiten Stellung erzielte horizontale Hell/Dunkel-Grenze.

Durch eine Verstellung des Außenkolbens 20 zwischen der ersten und zweiten Position kann so zwischen zwei Lichtverteilungen, in diesem Beispiel zwischen einer Abblendlichtund einer Fernlichtverteilung umgeschaltet werden.

Die Erfindung lässt sich dahingehend zusammenfassen, dass eine Entladungslampe und ein Scheinwerfer für ein Kraftfahrzeug vorgestellt werden. Um zwischen verschiedenen Lichtverteilungen umschalten zu können, ist ein Bewegungsglied vorgesehen, das zwischen mindestens zwei Stellungen bewegbar ist. Es weist mindestens ein optisch wirksames Element, bevorzugt eine Linse, auf, das ein gegenüber dem tatsächlichen Ort der Gasentladung verschobenes Bild hiervon erzeugt. Durch eine Bewegung des Bewegungsgliedes zwischen den beiden Stellungen wird bei dem Scheinwerfer eine Umschaltung zwischen zwei verschiedenen Lichtverteilungen ermöglicht, wobei sich jeweils für einen Bereich des Reflektors durch die Umschaltung die Gasentladung zu verschieben scheint, so dass sich verschiedene Lichtverteilungen ergeben. Bevorzugt handelt es sich bei dem Bewegungsglied um den Außenkolben der Entladungslampe, an dem zwei Linsen angeordnet sind, und der um die optische Achse drehbar ist.

## Patentansprüche

1. Entladungslampe für ein Kraftfahrzeug mit
- einem Entladungsgefäß (16) zur Erzeugung einer Gasentladung (17),
**dadurch gekennzeichnet, dass**
- an der Lampe (10) mindestens ein Bewegungsglied (20) vorgesehen ist,
- das mindestens ein optisch wirksames Element (30) aufweist, das so beschaffen ist, dass es ein Bild der Gasentladung (17) erzeugt, das gegenüber dem tatsächlichen Ort der Gasentladung (17) verschoben ist,
- und das das Bewegungsglied (20) zwischen mindestens zwei Stellungen bewegbar ist.

2. Entladungslampe nach Anspruch 1, bei der
- das Bewegungsglied (20) eine Hülse aus transparentem Material ist,
- die das Entladungsgefäß (16) umgibt.

3. Entladungslampe nach Anspruch 2, bei der das Bewegungsglied der Außenkolben (20) der Entladungslampe (10) ist.

4. Entladungslampe nach einem der vorangehenden Ansprüche, bei der
- das Bewegungsglied (20) drehbeweglich,
- insbesondere um die optische Achse drehbar angeordnet ist.

5. Entladungslampe nach einem der vorangehenden Ansprüche, bei der das optisch wirksame Element mindestens eine Linse (30) ist.

6. Scheinwerfer für ein Kraftfahrzeug mit
- einem Reflektor (42) und einer in dem Reflektor (42) angeordneten Lampe (10) zur Erzeugung einer Gasentladung (17),
**dadurch gekennzeichnet, dass**
- an der Lampe (10) mindestens ein Bewegungsglied (20) vorgesehen ist,
- das mindestens ein optisch wirksames Element (30) aufweist, das so beschaffen ist, dass es ein Bild der Gasentladung (17) erzeugt, das gegenüber dem tatsächlichen Ort der Gasentladung (17) verschoben ist,
- und dass das Bewegungsglied (20) gegenüber der Lampe (10) und/oder dem Reflektor (42) zwischen mindestens zwei Stellungen bewegbar ist,
- wobei in der ersten Stellung des Bewegungsgliedes (20) mindestens ein Bereich (58b) des Reflektors (42) direkt durch die Gasentladung (17) beleuchtet wird,
- und in der zweiten Stellung des Bewegungsgliedes (20) der Bereich (58b) des Reflektors (42) durch das von dem optisch wirksamen Element (30) erzeugte Bild der Gasentladung (17) beleuchtet wird.

7. Scheinwerfer nach Anspruch 6, bei dem die Lampe (10) nach einem der Ansprüche 1 bis 5 ausgebildet ist.

8. Scheinwerfer nach einem der Ansprüche 6 oder 7, bei dem
- in der ersten Stellung des Bewegungsgliedes (20) mindestens ein erster Bereich (58a) des Reflektors (52), der ober- und/oder unterhalb der Lampe (10) angeordnet ist, durch das von dem optisch wirksamen Element (30) erzeugte Bild der Entladung (17) beleuchtet wird,
- während mindestens ein zweiter Bereich (58b) des Reflektors (42), der neben der Lampe (10) angeordnet ist, direkt durch die Entladung (17) beleuchtet wird.

9. Scheinwerfer nach Anspruch 8, bei dem
- in der zweiten Stellung des Bewegungsgliedes (20) der erste Bereich (58a) direkt durch die Entladung (17) beleuchtet wird,
- während der zweite Bereich (58b) durch das von dem optisch wirksamen Element (30) erzeugte Bild der Entladung (17) beleuchtet wird.

10. Scheinwerfer nach einem der Ansprüche 6 bis 9, bei dem
- in der zweiten Stellung des Bewegungsgliedes (20) ein Lichtbündel mit einer Hell/Dunkel-Grenze, beispielsweise ein Abblendlichtbündel, erzeugt wird,
- und in der ersten Stellung des Bewegungsgliedes (20) ein Lichtbündel ohne eine Hell/Dunkel-Grenze, beispielsweise ein Fernlichtbündel erzeugt wird.
